# EUROPÄISCHE PATENTSCHRIFT

(11) **EP 1 496 464 B1**
(45) Veröffentlichungstag und Bekanntmachung des Hinweises auf die Patenterteilung: **16.01.2008**
(21) Anmeldenummer: 04010994.4
(22) Anmeldetag: 08.05.2004
(51) Int. Cl.: G06K 7/10

(54) **Vorrichtung zum optischen Abtasten von Objekten, insbesondere von Markierungen**
Optical scanner for objects in particular marks
Lecteur à balayage optique pour objets, en particulier des marques

(30) Priorität: 11.07.2003 DE 10331467
(43) Veröffentlichungstag der Anmeldung: 12.01.2005
(73) Patentinhaber: SICK AG, 79183 Waldkirch (DE)
(72) Erfinder: Reichenbach, Jürgen, 79312 Emmendingen (DE); Anselment, Christoph, 79183 Waldkirch (DE); Gehring, Roland, 79215 Elzach (DE); Nübling, Ralf Ulrich, 79211 Denzlingen (DE)
(74) Vertreter: Ludewigt, Christoph

(56) Entgegenhaltungen:
- EP-A- 0 480 348
- DE-A- 4 441 298
- US-A- 5 801 370

## Beschreibung

Die Erfindung betrifft eine Erfindung zum optischen Abtasten von Objekten, insbesondere von Markierungen gemäß dem Oberbegriff des Anspruchs 1.

Eine Vorrichtung dieser Gattung, ein sogenannter Scanner, ist aus der EP 0 480 348 A1 bekannt. Bei dieser bekannten Vorrichtung werden die Lichtstrahlen von zwei Sendern, insbesondere Lasern mittels eines halbdurchlässigen Spiegels in eine gemeinsame Strahlrichtung gelenkt, treffen auf einen rotierenden Polygonspiegel auf, der die Lichtstrahlen auf die abzutastenden Markierungen, z. B. einen Barcode lenkt. Das von den Markierungen reflektierte Licht wird durch den Polygonspiegel in ein gemeinsames Empfängersystem gelenkt. Die zwei Sender sind auf einen unterschiedlichen Fokusabstand fokussiert, um Markierungen in unterschiedlichen Abständen von der Vorrichtung abtasten und lesen zu können. Die beiden Sender werden zunächst alternierend betrieben, um festzustellen, welcher Fokusabstand der Abstand dem abzutastenden Markierungen entspricht. Dann wird nur noch der Sender betrieben, der dem ermittelten zutreffenden Abstand entspricht, um die Markierung abzutasten und zu lesen. Durch die Verwendung von zwei Sendern mit unterschiedlichem Fokusabstand wird eine vergrößerte Tiefenschärfe der Vorrichtung erhalten.

Aus der US 6,527,184 B1 ist eine Vorrichtung bekannt, bei welcher zwei Paare von Sendern der aus der EP 0 480 348 A1 bekannten Art verwendet werden. Die in einer gemeinsame Achse zusammenfallenden Lichtstrahlen der jeweiligen zwei Sender-Paare verlaufen in unterschiedlichen Ebenen, die in Richtung der Drehachse des Polygonspiegels gegeneinander versetzt sind. Dadurch soll die Paralaxe ausgeglichen werden, die bei unterschiedlichen Abständen auftreten kann.

Aus der EP 0 643 362 A1 ist eine Vorrichtung bekannt, bei welcher der Lichtstrahl eines Senders über einen rotierenden Polygonspiegel und einen Winkelspiegel auf die abzutastende Markierung gelenkt wird. An den zwei im Winkel zueinander angeordneten Spiegelebenen des Winkelspiegels wird die Abtastebene des Lichtstrahls in zwei sich kreuzende Abtastebenen umgelenkt, die der Lichtstrahl aufeinanderfolgend durchläuft. Es ist nur ein Empfängersystem vorhanden, welches die Informationen der aufeinander folgend durchlaufenden Abtastebene auswertet. Die Abtastung in zwei sich kreuzenden Ebenen ermöglicht eine omnidirektionale Lesung eines Barcodes bzw. Strichcodes

Aus der US 5,801,370 ist ein Barcode-Lesegerät bekannt, wie es in sogenannten "point of sale" Anwendungen zum Einsatz kommt. Dabei sind mehrere Lichtstrahlen vorgesehen, die auf ein gemeinsames Polygonrad gerichtet sind und von diesem über Spiegel aus verschiedenen Winkeln in einen Lesebereich gelenkt werden. Jedem Lichtsender ist ein Lichtempfänger zugeordnet. Die Lichstrahlen werden dabei unter unterschiedlichsten Winkeln auf das Polygonrad geführt, so dass insgesamt jeder Lichtstrahl auf eine andere Seite eines zu lesenden Objekts trifft. Damit soll sichergestellt werden, dass ein Barcode auf einem Artikel, unabhängig von seiner Positionierung auf dem Artikel, von wenigstens einem der Lichtstrahlen gelesen werden kann.

Der Erfindung liegt die Aufgabe zugrunde, eine Vorrichtung der eingangs genannten Gattung zur Verfügung zu stellen, die bei einfachem Aufbau eine hohe Flexibilität im Einsatz aufweist.

Diese Aufgabe wird erfindungsgemäß gelöst durch eine Vorrichtung mit den Merkmalen des Anspruchs 1.

Vorteilhafte Ausführungen und Weiterbildungen der Erfindung sind in den Unteransprüchen angegeben.

Der wesentliche Gedanke der Erfindung besteht darin, zur optischen Abtastung von Markierungen zwei Sender-Empfänger-Kanäle in einer Vorrichtung mit einem einzigen gemeinsamen rotierenden Polygonspiegel zu vereinigen. Die Strahlrichtungen der Lichtstrahlen der zwei Sender sind in Drehrichtung des Polygonspiegels im Winkel gegeneinander versetzt. Dadurch können die zwei Sender-Empfänger-Kanäle die Markierungen gerennt voneinander abtasten.

Unter Licht im Sinne der Erfindung wird jegliche optische Strahlung verstanden, beispielsweise Infrarotstrahlung, sichtbares Licht oder Ultraviolettstrahlung.

Die Abtastung der Markierung in zwei getrennten Sender-Empfänger-Kanälen führt zu einer Vielzahl von unterschiedlichen Ausgestaltungen und Anwendungen der Vorrichtung, die eine flexible Anpassung der Vorrichtung an verschiedene Anforderungen ermöglicht.

Da die Lichtstrahlen der zwei Sender-Empfänger-Kanäle im Winkel gegeneinander versetzt auf die Spiegelflächen des Polygonspiegels auftreffen, tasten die beiden Sender-Empfänger-Kanäle die Markierung phasenversetzt ab. Sind die zwei Sender-Empfänger-Kanäle identisch aufgebaut, so ergibt sich hierdurch eine Verdoppelung der Abtastfrequenz gegenüber einer herkömmlichen Scanner-Vorrichtung mit nur einem Sender-Empfänger-Kanal.

In einer weiteren Anwendung können die zwei Sender-Empfänger-Kanäle auf einen unterschiedlichen Fokusabstand eingestellt sein oder über eine Autokollimation einstellbar sein. In diesem Falle kann der Tiefenschärfen-Bereich der Vorrichtung entsprechend vergrößert werden. Dabei besteht auch die Möglichkeit, zunächst die zwei Sender-Empfänger-Kanäle auf unterschiedlichen Fokusabstand einzustellen, um den tatsächlichen Abstand einer abzutastenden Markierung zu erfassen und dann beide Sender-Empfänger-Kanäle auf diesen so ermittelten Abstand der Markierung zu fokussieren, um die Markierung mit der doppelten Abtastfrequenz abzutasten.

Die omnidirektionale Abtastung eines Barcodes soll eine Abtastung ermöglichen, die weitgehend unabhängig davon ist, unter welchem Winkel die Abtastlinie des Scanners zu den Strichen des Barcodes verläuft. Für eine solche omnidirektionale Abtastung ist es vorteilhaft, wenn der Fokusfleck des abtastenden Lichtstrahls möglichst kreisrund ist. Werden Barcodes mit schlechter Druckqualität (z.B. mittels Tintenstrahl-Drucker hergestellt Barcodes) abgetastet, so ist es dagegen vorteilhaft, wenn der Scanner-Lichtfleck eine größere Abmessung parallel zum Verlauf der Striche der Barcodes aufweist, z.B. elliptisch ausgebildet ist. Diese einander widersprechenden Anforderung können erfindungsgemäß in einer Vorrichtung dadurch vereinigt werden, dass der eine Sender-Empfänger-Kanal mit einem kreisrunden Fokusfleck ausgebildet ist, während der andere Sender-Empfänger-Kanal mit einem länglichen, z.B. elliptischen Fokusfleck ausgebildet ist. Sind die Sender beider Kanäle mit einer Blendenverstellung ausgestattet, so ist es auch hier möglich, beide Kanäle bei Bedarf auf die eine dieser beiden Betriebsweisen einzustellen, um wiederum mit dieser ausgewählten Betriebsweise eine Abtastung mit doppelter Scan-Frequenz durchführen zu können.

Die vorzugsweise als Lichtquelle der Sender verwendeten Laserdioden weisen häufig eine unrunde, insbesondere rechteckige abstrahlende Fläche auf. Dadurch ergibt sich ein Astigmatismus bei der Fokussierung, d.h. ein unterschiedlicher Fokusabstand in der Ebene der längeren und der Ebene der kürzeren Achse der Laserdiode. Werden die Laserdioden der zwei Scan-Kanäle um ca. 90° gegeneinander verdreht angeordnet, so kann dieser Astigmatismus ausgenützt werden, um entweder den Tiefenschärfenbereicht der gesamten Vorrichtung zu vergrößern oder um z.B. in den beiden Scan-Kanälen elliptische Fokusflecke mit unterschiedlicher Orientierung der Ellipsenachsen zu erzeugen.

In manchen Fällen weisen die optisch abzutastenden Markierungen eine Oberflächenreflexion auf, die eine Diskriminierung zwischen der von den Markierungen reflektierten und der von dem Hintergrund reflektierten Lichtintensität erschwert. Dies ist z.B. bei Codes der Fall, die durch eine transparente Folie abgedeckt sind. In solchen Fällen kann die Vorrichtung in vorteilhafter Weise so ausgebildet sein, dass die zwei Sender-Empfänger-Kanäle mit unterschiedlicher Polarisation des Lichtes, z.B. mit gekreuzter linearer Polarisation oder mit zirkularer Polarisation betrieben werden. Damit ist eine Unterscheidung zwischen einer Oberflächenreflexion der Markierungen und einer diffusen Reflexion des Hintergrunds auch bei gleicher Lichtintensität möglich.

Die Sender-Empfänger-Kanäle können mit Licht gleicher oder unterschiedlicher Wellenlänge betrieben werden. Eine unterschiedliche Wellenlänge kann beispielsweise von Vorteil sein, wenn Markierungen mit unterschiedlichem Kontrast, d.h. mit Kontrastmaximum bei unterschiedlichen Wellenlängen, abgetastet werden.

Durch den im Winkel gegeneinander versetzten Verlauf der Lichtstrahlen der zwei Sender-Empfänger-Kanäle ist auch eine stereometrische Auswertung der Signale der beiden Kanäle möglich. Da die Sender der beiden Kanäle einen bekannten definierten Abstand von einander haben, kann aus dem jedem Reflexionswinkel zugeordneten Wert des reflektierten Lichtes der beiden Kanäle eine Abstandsinformation des reflektierenden abgetasteten Oberflächenbereiches eines Objektes zugeordnet werden. Aus diesen Werten der Kanäle können in einer stereometrischen Auswertung zweidimensionale oder dreidimensionale Oberflächenbilder des abgetasteten Objektes erhalten werden.

Da die Abtastung der Objekte durch die zwei Scanner-Kanäle sich bereichsweise überlappen kann, ist zweckmäßig empfängerseitig eine Trennung der Sender-Empfänger-Kanäle vorgesehen.
Die empfängerseitige Trennung der Sender-Empfänger-Kanäle kann auf unterschiedliche Weise erfolgen. Es ist eine Trennung durch selektive Kollimation der Sender-Empfänger-Kanäle möglich. Eine solche unterschiedliche Kollimation kann mechanisch-konstruktiv in an sich bekannter Weise durch den Aufbau des optischen Systems des Sender-Empfänger-Kanal erreicht werden. Eine zusätzliche oder auch von der Kollimation unabhängige empfängerseitige Trennung der Kanäle ist dadurch möglich, dass die Sender mit unterschiedlicher Frequenz moduliert werden und/oder die Sender mit unterschiedlicher Wellenlänge insbesondere Laserwellenlänge betrieben werden. Ebenso ist eine Trennung der Kanäle dadurch möglich, dass die beiden Kanäle mit senkrecht zueinander linear polarisiertem Licht betrieben werden. Die Empfänger sind dabei jeweils auf die Sendermodulationsfrequenz bzw. die Senderwellenlänge bzw. die Senderpolarisation abgestimmt.

Es ist ohne weiteres ersichtlich, dass die erfindungsgemäße Vorrichtung nicht auf eine der vorstehend angegebenen Betriebsweisen festgelegt ist, sondern auch dynamisch, insbesondere softwaregesteuert von eine Betriebsweise auf eine andere Betriebsweise umgeschaltet werden kann. Eine solche dynamische bzw. adaptive Umschaltung kann in unterschiedlicher Weise geschehen. Es kann beispielsweise die Abtastinformation des einen Kanals dazu verwendet werden, um eine optimierte Abtastung bzw. Signalverarbeitung für die folgenden Abtastungen beider Kanäle zu erhalten. Dies kann darin bestehen, dass die Fokussierung bzw. die Blendeneinstellung der Sender-Optik nachgefahren wird, wie dies bereits vorstehend erwähnt wurde. Die optimierte Einstellung kann für den gesamten Abtastvorgang beibehalten werden. Es ist auch möglich, während eines Scan-Durchlaufs ein Abtastprofil, z.B. ein Abstandsprofil aufzunehmen und zu speichern und die Sender-Optik bei dem nächsten Scan-Durchlauf entsprechend diesem gespeicherten Profil nachzufahren.

Weiter kann auf Grund der während der Abtastung gewonnenen Informationen die Elektronik der Signalbearbeitung optimiert werden. Ebenso ist es möglich, eine Software-Steuerung z.B. auf Grund der während des Scan-Vorgangs gewonnenen Informationen einzustellen.

Die verschiedenen Sender-Empfänger-Kanäle der Vorrichtung können weiter mit nachgeschalteten unterschiedlichen elektrischen bzw. elektronischen Signalkonditionierungssystemen arbeiten. Die Signalverarbeitung der beiden Kanäle kann verschiedene Filter, verschiedene Umsetzungen in binäre Signale oder sonstige Signalverarbeitungen aufweisen.

Weiter ist es möglich, dass die verschiednen Scan-Kanäle mit unterschiedlichen Codeerkennungsverfahren arbeiten. Beispielsweise erfolgt die Signalauswertung mit unterschiedlicher Software bzw. mit unterschiedlichen Codeerkennungsparametern. Eine wichtige Anwendung ist hierbei die Inverscodierung. Es kann mit einem Sender-Empfänger-Kanal eine Codierung mit dunklen Markierungen auf hellem Grund und mit dem anderen Sender-Empfänger-Kanal eine inverse Codierung mit hellen Markierungen auf dunklen Grund abgetastet und gelesen werden.

Im Folgendem wird die Erfindung an Hand der beigefügten Zeichnungen beispielhaft erläutert. Es zeigen
- **Figur 1**: schematisch das Grundprinzip der erfindungsgemäßen Vorrichtung,
- **Figur 2**: die Abtastung einer Markierung mit doppelter Abtastfrequenz,
- **Figur 3**: die Abtastung einer Markierung mit vergrößerter Tiefenschärfe und
- **Figur 4**: die Abtastung mit unterschiedlichen Fokusfleck-Formen.

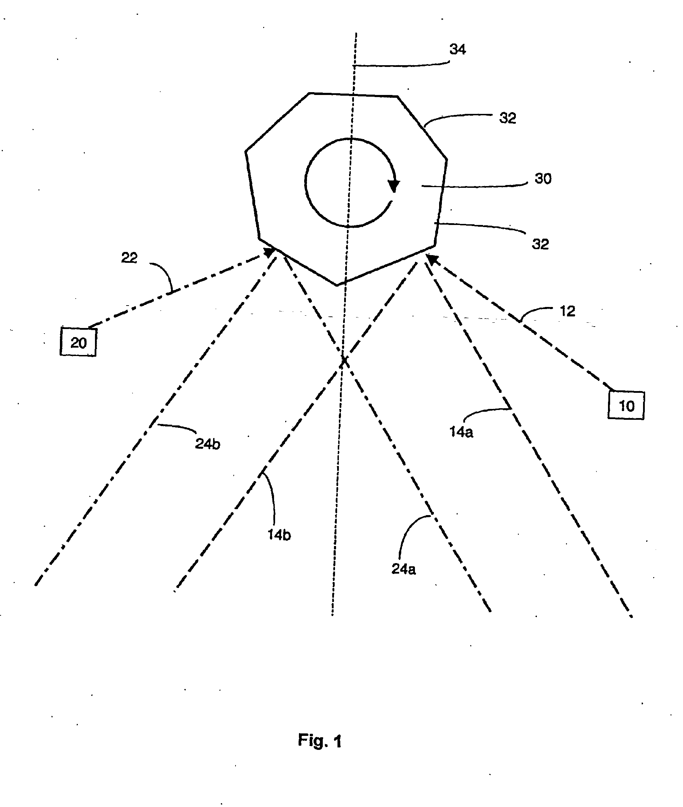

In Figur 1 ist schematisch das Grundprinzip der Erfindung dargestellt.

Ein erster Sender 10 besteht in an sich bekannter Weise aus einer Lichtquelle z.B. einem Laser und einem optischen Fokussierungssystem. Der Sender 10 sendet einen Lichtstrahl 12 auf einen rotierenden Polygonspiegel 30. An den Spiegelflächen 32 des Polygonspiegels 30 wird der Lichtstrahl 12 reflektiert und entsprechend der Drehung der Polygonspiegels 30 in einer Abtastebene fächerförmig über einen Abtastwinkel geschwenkt. Dabei überstreicht der abtastende Lichtstrahl 14 beim Durchlauf jeder Spiegelfläche 32 einen Winkelbereich zwischen einem minimalen Ablenkwinkel 14a und einem maximalen Ablenkwinkel 14b. Der abtastende Lichtstrahl 14 überstreicht die abzutastende Markierung, z.B. einen Barcode, wird von dort zu dem Polygonspiegel 30 reflektiert und wird von der Spiegelfläche 32 des Polygonspiegels 30 in ein nicht dargestelltes Empfängersystem gelenkt, welches in an sich bekannter Weise ausgebildet ist, insbesondere einen optoelektronischen Wandler und eine nachgeschaltete Signalverarbeitung aufweist.

Ein zweiter Sender 20, der ebenfalls aus einer Lichtquelle, insbesondere einem Laser und einem optischen Fokussierungssystem besteht, sendet einen Lichtstrahl 22 auf den selben rotierenden Polygonspiegel 30. Der Lichtstahl 22 des zweiten Senders 20 wird an den Spiegelflächen 32 des Polygonspiegels 30 reflektiert und überstreicht mit dem an dem Polygonspiegel 30 reflektierten abtastenden Lichtstrahl 24 einen Winkelbereich zwischen einem Winkel 24a und einem Winkel 24b.

Wie aus Figur 1 deutlich wird, sind die Sender 10 und 20 so angeordnet, dass ihre Lichtstrahlen 12 bzw. 22 unter verschiedenen Winkeln gegen den Polygonspiegel 30 gerichtet sind. Mit anderen Worten der Lichtstrahl 22 des zweiten Senders 20 ist gegenüber dem Lichtstrahl 12 des ersten Senders 10 im Drehsinn des rotierenden Polygonspiegels 30 im Winkel versetzt. Vorzugsweise sind dabei der erste Sender 10 und der zweite Sender 20 in einer gemeinsamen zur Rotationsachse des Polygonspiegels 30 senkrechten Ebene angeordnet, so dass die abtastenden Lichtstrahlen 14 bzw. 24 der beiden Sender 10 bzw. 20 das abzutastende Objekt mit der Markierung in einer gemeinsamen Ebene abtasten, die in Figur 1 der Zeichenebene entspricht. Es ist jedoch erfindungsgemäß nicht notwendig, dass die Abtastebenen der zwei Sendern 10 und 20 in der selben Ebene liegen. Es ist ebenso möglich, die Abtastebenen des ersten Senders 10 und des zweiten Senders 20 in unterschiedlichen zueinander parallelen und in Richtung der Rotationsachse des Polygonspiegels 30 gegeneinander versetzten Ebenen anzuordnen.

Wie in Figur 1 gezeigt ist, sind die Sender 10 und 20 vorzugsweise so angeordnet, dass die Richtung ihrer Lichtstrahlen 12 bzw. 22 spiegelsymmetrisch zu einer Symmetrieebene 34 verlaufen, die die Rotationsachse des Polygonspiegels 30 einschließt. Der Polygonspiegel 30 ist vorzugsweise mit einer ungeraden Spiegelteilung ausgebildet, d.h. mit z.B. 5, 7, 9 usw. in gleicher Winkelteilung angeordneten Spiegelflächen 32. Das Ausführungsbeispiel der Figur 1 zeigt einen Polygonspiegel 30 mit sieben Spiegelflächen 32.

Die Trennung der Empfangssysteme des ersten Senders 10 und des zweiten Senders 20 kann auf unterschiedliche Weise erfolgen. Es ist eine mechanischkonstruktive Trennung durch unterschiedliche Fokussierung der zwei Sender-Empfänger-Kanäle möglich, wobei die Fokussierung mittels einer Autokollimation erfolgen kann. Solche Fokussierungssysteme und insbesondere Autokollimations-Systeme sind an sich bekannt. Weiter ist es möglich, den ersten Sender 10 und den zweiten Sender 20 mit unterschiedlicher Frequenz zu modulieren. In diesem Falle sind die jeweiligen Empfängersysteme auf die jeweilige Modulationsfrequenz des zugehörigen Senders 10 bzw. 20 abgestimmt. Weiter ist es möglich, die Sender-Empfänger-Kanäle mit unterschiedlichen Wellenlängen zu betreiben, insbesondere mit unterschiedlichen Laserwellenlängen der Sender 10 und 20. Auch hier ist eine entsprechende Abstimmung der Empfängersysteme auf die jeweilige Wellenlänge erforderlich. Schließlich können die Sender 10 und 20 linear polarisiertes Licht aussenden, wobei die Polarisationsebenen senkrecht zueinander angeordnet sind. Die Empfängersysteme weisen entsprechende Polarisationsfilter auf.

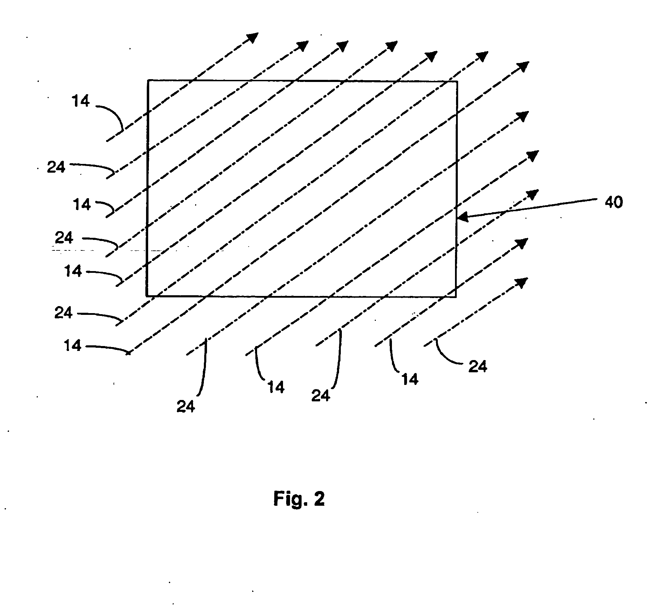

Bei der Anordnung der Sender 10 und 20 spiegelsymmetrisch zueinander und in der selben Ebene, wie dies in Figur 1 dargestellt ist, tasten die Lichtstrahlen 14 bzw. 24 der beiden Sender-Empfänger-Kanäle ein Objekt, welches eine abzutastende Markierung 40, z.B. eine Barcode trägt, in einer gemeinsamen Ebene ab. Die abtastenden Strahlen 14 bzw. 24 der Sender 10 bzw. 20 durchlaufen dabei die Abtastebene zeitlich phasenverschoben gegeneinander. Bei der symmetrischen Anordnung und der ungeraden Spiegelradteilung der Figur 1 ergibt sich dabei eine Phasenverschiebung um genau 50%. D. h. in dem Überlappungsbereich der Abtaststrahlen 14 und 24 eilt der abtastende Strahl 24 dem abtastenden Strahl 14 um 50% hinterher bzw. umgekehrt. Bewegt sich die abzutastende Markierung 40 unter der Scan-Vorrichtung hindurch bzw. wird die Scan-Vorrichtung über die abzutastende Markierung 40 bewegt, ergibt sich eine Abtastung der Markierung durch die abtastenden Strahlen 14 und 24 in der aus Figur 2 ersichtlichen Weise. Die Markierung 40 wird gegenüber einer Abtastung mit nur einem Lichtstrahl mit doppelter Abtastfrequenz abgetastet, wobei die Abtastlinien des zweiten Sender-Empfänger-Kanals genau zwischen den Abtastlinien des ersten Sender-Empfänger-Kanals liegen, wie dies in Figur 2 durch die strichlierten Abtastlinien 14 des ersten Kanals und die strichpunktierten Abtastlinien 24 des zweiten Kanals dargestellt ist.

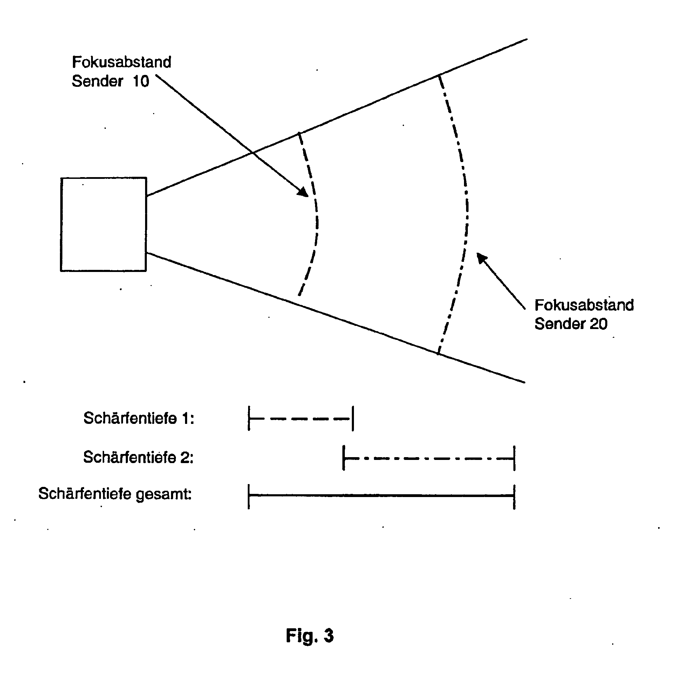

Figur 3 zeigt schematisch die Anwendung der Vorrichtung in einer Ausführung, bei welcher der erste Sender-Empfänger-Kanal und der zweite Sender-Empfänger-Kanal auf einen unterschiedlichen Fokusabstand eingestellt sind. Der Fokus des ersten Sender-Empfänger-Kanals ist dabei wiederum strichliert und der Fokus des zweiten Sender-Empfänger-Kanals strichpunktiert eingezeichnet. Unten in Figur 3 sind dabei der Tiefenschärfenbereich beider Kanäle und der sich durch die Überlappung dieser Tiefenschärfebereiche ergebende Gesamttiefenschärfebereich der Vorrichtung gezeigt.

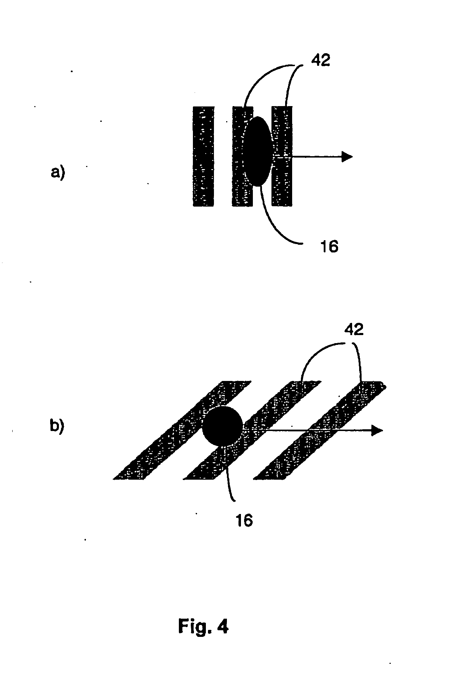

Figur 4 zeigt die Anwendung der Vorrichtung mit unterschiedlicher Form des Fokusfleckes 16. Dabei zeigt Figur 4a eine langgestreckte, insbesondere elliptische Form des Fokusfleckes 16. Diese Form des Fokusfleckes 16 eignet sich besonders für das Abtasten von Barcodes 42 mit schlechter Druckqualität. Die größere Achse des elliptischen Fokusfleckes 16 verläuft parallel zu den Strichen des Barcodes 42, so dass die Abtastung über einen größeren Längenbereich der Striche eine Verbesserung des Kontrastes ergibt.

Figur 4b zeigt die Ausbildung eines kreisrunden Fokusfleckes 16. Ein kreisrunder Fokusfleck 16 ist zweckmäßig, wenn die in Figur 4 jeweils durch eine Pfeil angedeutete Durchlaufrichtung des Barcodes 42 in Bezug auf die Abtastung nicht unter einem definierten Winkel zu dem Barcode 42 verläuft. Da keine bevorzugte Ausrichtung der Durchlaufrichtung zur Barcoderichtung vorliegt, ist ein Kreisform des Fokusfleckes 16 vorteilhaft, um eine omnidirektionale Abtastung zu ermöglichen.

Es ist selbstverständlich, dass die Erfindung nicht auf die Verwendung von zwei getrennten Sender-Empfänger-Kanälen beschränkt ist. Es können auch mehr als zwei getrennte Sender-Empfänger-Kanäle verwendet werden. Dabei können diese Kanäle jeweils unter verschiedenen Winkeln zu dem rotierenden Polygonspiegel angeordnet sein. Ebenso ist es möglich, die Sender-Empfänger-Kanäle in verschiedenen Ebenen in Bezug auf die Rotationsachse des Polygonspiegels anzuordnen. Weiter ist es möglich, mehrere Sender-Empfänger-Kanäle unter dem gleichen Winkel, jedoch in unterschiedlichen in Richtung der Rotationsachse parallel versetzten Ebenen anzuordnen.

## Patentansprüche

1. Vorrichtung zum optischen Abtasten von Objekten, insbesondere von Markierungen mit wenigstens zwei lichtemittierenden Sendern, mit einem rotierenden Polygonspiegel, der die Lichtstrahlen der Sender auf die abzutastenden Markierungen lenkt und das von den Markierungen reflektierte Licht auf ein Empfängersystem lenkt, wobei die Strahlrichtungen der Lichtstrahlen (14, 24) von wenigstens zwei Sendern (10, 20) in Drehrichtung des Polygonspiegels (30) im Winkel gegeneinander versetzt verlaufen und dass jedem Sender (10, 20) ein getrenntes Empfängersystem zugeordnet ist, wodurch zwei getrennte Sender-Empfänger-Kanäle gebildet sind, **dadurch gekennzeichnet, dass** die Strahlrichtungen der Sender (10,20) in einer gemeinsamen zur Rotationsachse des Polygonspiegels (30) senkrechten Ebene verlaufen, so dass die Lichtstrahlen (14,24) das Objekt in einer gemeinsamen Ebene abtasten.

2. Vorrichtung nach Anspruch 1, **dadurch gekennzeichnet, dass** die Strahlrichtungen der Sender (10, 20) im Winkel spiegelsymmetrisch zu einer die Rotationsachse des Polygonspiegels (30) einschließenden Symmetrieebene (34) verlaufen.

3. Vorrichtung nach einem der vorhergehenden Ansprüche, **dadurch gekennzeichnet, dass** der Polygonspiegel (30) eine ungerade Spiegelteilung aufweist.

4. Vorrichtung nach einem der Ansprüche 1 bis 3, **dadurch gekennzeichnet, dass** die wenigstens zwei Sender-Empfänger-Kanäle getrennte Fokussierungen aufweisen.

5. Vorrichtung nach Anspruch 4, **dadurch gekennzeichnet, dass** die Fokussierung wenigstens eines Sender-Empfänger-Kanals eine mechanische Autokollimation aufweist.

6. Vorrichtung nach einem der Ansprüche 1 bis 5, **dadurch gekennzeichnet, dass** die wenigstens zwei Sender-Empfänger-Kanäle unterschiedliche Blenden für die Form des Fokusfleckes (16) aufweisen.

7. Vorrichtung nach einem der Ansprüche 1 bis 6, **dadurch gekennzeichnet, dass** die wenigstens zwei Sender-Empfänger-Kanäle unterschiedliche Polarisation des Lichtes aufweisen.

8. Vorrichtung nach einem der Ansprüche 1 bis 7, **dadurch gekennzeichnet, dass** die wenigstens zwei Sender-Empfänger-Kanäle eine unterschiedliche Modulationsfrequenz des Senders und des jeweiligen darauf abgestimmten Empfängersystems aufweisen.

9. Vorrichtung nach einem der Ansprüche 1 bis 7, **dadurch gekennzeichnet, dass** die wenigstens zwei Sender-Empfänger-Kanäle unterschiedliche Wellenlängen des vom Sender emittierten Lichtes aufweisen.

10. Vorrichtung nach einem der vorhergehenden Ansprüche **dadurch gekennzeichnet, dass** die wenigstens zwei Sender (10, 20) jeweils einen Astigmatismus aufweisen und im Bezug auf die Abstrahlrichtung gegeneinander verdreht angeordnet sind.

11. Vorrichtungen nach einem der Ansprüche 1 bis 10 **dadurch gekennzeichnet, dass** die wenigstens zwei Sender-Empfänger-Kanäle die Markierungen alternierend abtasten.

12. Vorrichtung nach einem der Ansprüche 1 bis 10, **dadurch gekennzeichnet, dass** die wenigstens zwei Sender-Empfänger-Kanäle die Markierungen mit unterschiedlichem Fokusabstand abtasten.

13. Vorrichtung nach einem der Ansprüche 1 bis 10 **dadurch gekennzeichnet, dass** die wenigstens zwei Sender-Empfänger-Kanäle mit unterschiedlichen elektronischen Signalkonditionierungsverfahren arbeiten.

14. Vorrichtung nach einem der Ansprüche 1 bis 10, **dadurch gekennzeichnet, dass** die wenigstens zwei Sender-Empfänger-Kanäle mit unterschiedlichen Codeerkennungsverfahren arbeiten.

15. Vorrichtung nach einem der vorhergehenden Ansprüche **dadurch gekennzeichnet, dass** die Signale des Empfängersystems eines Sender-Empfänger-Kanals zur Nachführung der Parameter wenigstens eines anderen Sender-Empfänger-Kanals verwendet werden.

## Claims

1. Apparatus for the optical scanning of objects, especially markings by means of at least two light-emitting transmitters, having a rotating polygonal mirror which deflects the light beams from the transmitters onto the markings to be scanned, and deflects the light reflected from the markings onto a receiver system, with the beam directions of the light beams (14, 24) from at least two transmitters (10, 20) running offset at an angle to one another in the rotation direction of the polygonal mirror (30), and with each transmitter (10, 20) being associated with a separate receiver system, thus forming two separate transmitter/receiver channels, **characterized in that** the beam directions of the transmitters (10, 20) run on a common plane at right angles to the rotation axis of the polygonal mirror (30), so that the light beams (14, 24) scan the object on a common plane.

2. Apparatus according to Claim 1, **characterized in that** the beam directions of the transmitters (10, 20) are at an angle with mirror-image symmetry with respect to a plane of symmetry (34) which includes the rotation axis of the polygonal mirror (30).

3. Apparatus according to one of the preceding claims, **characterized in that** the polygonal mirror (30) has an odd number of mirror sections.

4. Apparatus according to one of Claims 1 to 3, **characterized in that** the at least two transmitter/receiver channels have separate focusing.

5. Apparatus according to Claim 4, **characterized in that** the focusing for at least one transmitter/receiver channel has mechanical autocollimation.

6. Apparatus according to one of Claims 1 to 5, **characterized in that** the at least two transmitter/receiver channels have different shutters for the shape of the focal spot (16).

7. Apparatus according to one of Claims 1 to 6, **characterized in that** the at least two transmitter/receiver channels have different light polarization.

8. Apparatus according to one of Claims 1 to 7, **characterized in that** the at least two transmitter/receiver channels use a different modulation frequency for the transmitter and for the respective receiver system which is tuned to it.

9. Apparatus according to one of Claims 1 to 7, **characterized in that** the at least two transmitter/receiver channels use different wavelengths for the light emitted from the transmitter.

10. Apparatus according to one of the preceding claims, **characterized in that** the at least two transmitters (10, 20) each have astigmatism and are arranged with their emission directions rotated with respect to one another.

11. Apparatuses according to one of Claims 1 to 10, **characterized in that** the at least two transmitter/receiver channels scan the markings alternately.

12. Apparatus according to one of Claims 1 to 10, **characterized in that** the at least two transmitter/receiver channels scan the markings with a different focal length.

13. Apparatus according to one of Claims 1 to 10, **characterized in that** the at least two transmitter/receiver channels operate using different electronic signal conditioning methods.

14. Apparatus according to one of Claims 1 to 10, **characterized in that** the at least two transmitter/receiver channels operate using different code recognition methods.

15. Apparatus according to one of the preceding claims, **characterized in that** the signals in the receiver system in one transmitter/receiver channel are used to readjust the parameters for at least one other transmitter/receiver channel.

## Revendications

1. Dispositif pour le balayage optique d'objets, en particulier de marquages, comprenant au moins deux émetteurs à émission de lumière, avec un miroir polygonal rotatif, qui dirige les faisceaux lumineux des émetteurs sur les marquages à balayer et qui dirige la lumière réfléchie par les marquages sur un système récepteur, les directions de faisceau des faisceaux lumineux (14, 24) provenant d'au moins deux émetteurs (10, 20) étant décalées les unes par rapport aux autres en angle dans le sens de rotation du miroir polygonal (30) et un système récepteur séparé étant attribué à chaque émetteur (10, 20), sachant que deux canaux émetteur-récepteur séparés sont formés, **caractérisé en ce que** les directions de faisceau des émetteurs (10, 20) sont agencées dans un plan commun, perpendiculaire à l'axe de rotation du miroir polygonal (30), de telle sorte que les faisceaux lumineux (14, 24) balaient l'objet dans un plan commun.

2. Dispositif selon la revendication 1, **caractérisé en ce que** les directions de faisceaux des émetteurs (10, 20) sont disposées en angle symétriquement par rapport à un plan de symétrie (34) incluant l'axe de rotation du miroir polygonal (30).

3. Dispositif selon l'une quelconque des revendications précédentes, **caractérisé en ce que** le miroir polygonal (30) présente une division de miroir impaire.

4. Dispositif selon l'une quelconque des revendications 1 à 3, **caractérisé en ce que** les au moins deux canaux émetteur-récepteur présentent des focalisations séparées.

5. Dispositif selon la revendication 4, **caractérisé en ce que** la focalisation d'au moins un canal émetteur-récepteur présente une autocollimation mécanique.

6. Dispositif selon l'une quelconque des revendications 1 à 5, **caractérisé en ce que** les au moins deux canaux émetteur-récepteur présentent différents obturateurs pour la forme du spot (16).

7. Dispositif selon l'une quelconque des revendications 1 à 6, **caractérisé en ce que** les au moins deux canaux émetteur-récepteur présentent une polarisation différente de la lumière.

8. Dispositif selon l'une quelconque des revendications 1 à 7, **caractérisé en ce que** les au moins deux canaux émetteur-récepteur présentent une fréquence de modulation différente de l'émetteur et du système récepteur concerné adapté à cette fréquence.

9. Dispositif selon l'une quelconque des revendications 1 à 7, **caractérisé en ce que** les au moins deux canaux émetteur-récepteur présentent différentes longueurs d'onde de la lumière émise par l'émetteur.

10. Dispositif selon l'une quelconque des revendications précédentes, **caractérisé en ce que** les au moins deux émetteurs (10, 20) présentent chacun un astigmatisme et sont disposés tournés dans le sens contraire par rapport à la direction du faisceau.

11. Dispositifs selon l'une quelconque des revendications 1 à 10, **caractérisés en ce que** les au moins deux canaux émetteur-récepteur balaient alternativement les marquages.

12. Dispositif selon l'une quelconque des revendications 1 à 10, **caractérisé en ce que** les au moins deux canaux émetteur-récepteur balaient les marquages avec une distance de foyer différente.

13. Dispositif selon l'une quelconque des revendications 1 à 10, **caractérisé en ce que** les au moins deux canaux émetteur-récepteur travaillent avec différents procédés électroniques de conditionnement de signal.

14. Dispositif selon l'une quelconque des revendications 1 à 10, **caractérisé en ce que** les au moins deux canaux émetteur-récepteur travaillent avec différents procédés de reconnaissance de code.

15. Dispositif selon l'une quelconque des revendications précédentes, **caractérisé en ce que** les signaux du système récepteur d'un canal émetteur-récepteur sont utilisés pour l'ajustement des paramètres d'au moins un autre canal émetteur-récepteur.
